# FASCICULE DE BREVET EUROPEEN

(11) **EP 2 473 340 B1**
(45) Date de publication et mention de la délivrance du brevet: **06.11.2013**
(21) Numéro de dépôt: 10747882.8
(22) Date de dépôt: 02.09.2010
(51) Int. Cl.: B29D 30/66, B29C 70/88, B29C 70/54

(54) **DISPOSITIF ET PROCÉDÉ D'IMPLANTATION DE FILS DANS UN PROFILE EN CAOUTCHOUC**
VORRICHTUNG UND VERFAHREN ZUR EINBETTUNG VON DRÄHTEN IN EINEN KAUTSCHUKPROFILABSCHNITT
DEVICE AND METHOD FOR EMBEDDING WIRES IN A RUBBER PROFILE SECTION

(30) Priorité: 03.09.2009 FR 0956009
(43) Date de publication de la demande: 11.07.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: HINC, Henri, F-63540 Romagnat (FR)
(74) Mandataire: Reynaud, Georges
(86) Numéro de dépôt international: PCT/EP2010/062907
(87) Numéro de publication internationale: WO 2011/026916

(56) Documents cités:
- EP-A1- 2 006 078
- EP-A2- 0 389 465
- EP-A2- 1 213 383
- US-A- 5 186 776
- US-A- 5 429 853
- US-A- 5 642 679

## Description

L'invention concerne le domaine technique des pneumatiques pour véhicules, et en particulier celui de la fabrication des pneumatiques comportant des fibres injectées selon une direction donnée dans un des composants en caoutchouc formant ledit pneumatique.

La publication EP 1 213 130 donne une idée précise de ce type de pneumatique, dans lequel des fibres de renforcement de faible longueur, ou inserts, sont implantés de manière orientée dans la bande de roulement, afin d'améliorer les propriétés mécaniques de cette partie du pneumatique selon une direction donnée.

La publication US 7 005 022 propose une méthode de réalisation de ce type de composant comportant des fibres orientées, qui prévoit dans un premier temps, d'extruder un profilé formé d'un matériau caoutchoutique comportant des fibres courtes orientées de manière isotrope, puis dans un deuxième temps, à l'aide d'un moyen de perçage ayant sensiblement la forme d'un peigne, de percer le profilé selon une direction donnée pour orienter, par effet d'entraînement des fibres par les aiguilles, une partie des fibres dans la direction de perçage.

Ce premier type de procédé permet d'atteindre une partie du résultat, mais ne permet pas d'orienter l'ensemble des fibres dans la direction voulue.

La publication EP 1 213 383 propose un autre moyen permettant d'implanter les dits inserts dans un composant de caoutchouc d'un bandage de pneumatique.

Ce dispositif comporte une aiguille creuse apte à pénétrer dans le composant en caoutchouc, et dans laquelle circule la fibre de renforcement, un support mobile apte à effectuer un mouvement alternatif et supportant ladite aiguille, une lame de coupe pour séparer la fibre à implanter, et au moins deux moyens de serrage pour maintenir et régler le positionnement de la fibre.

Cet appareil présente l'avantage de permettre l'implantation de l'ensemble des fibres ou des inserts de renforcement selon une direction précise et maîtrisée.

On observe toutefois que les moyens de serrage prévus dans ce dispositif ont pour objet de pousser et de maintenir la fibre pour forcer, à chaque cycle, la circulation de la fibre à l'intérieur de l'aiguille.

Ce mode de fonctionnement a pour effet de mettre la fibre en compression.

Malgré la présence de moyens de guidage, cette mise en compression est susceptible de provoquer le flambage de la fibre dans les espaces de libre parcours, en particulier lorsque la fibre est une fibre textile peu résistante à ce type d'efforts.

D'autres procédés et dispositifs destinés à l'implantation de fils dans des matériaux composites utilisés principalement dans l'industrie aéronautique sont également décrits dans des publications antérieures.

La publication US 5 186 776 décrit un dispositif similaire dans lequel le fil, comme dans le dispositif décrit précédemment, est poussé à l'aide d'un système anti-retour disposé en sorti du moyen de distribution du fil dans le conduit d'une aiguille couplée à un moyen d'excitation ultrasonique.

La publication US 5 642 679 décrit un dispositif qui a pour objet d'insérer un fil continu au travers d'une multitude de couches de matériau composite pour les rendre solidaires entre elles. Ce dispositif ne prévoit pas de faire circuler le fil à l'intérieur de l'aiguille et ne prévoit pas de moyens de coupe susceptible, comme on le verra par la suite, de dégager une amorce à chaque implantation de l'aiguille dans le matériau.

L'invention a pour objet d'apporter un moyen d'utilisation original d'un appareil du type à implantation directe dans une direction donnée d'un fil dans un composant en caoutchouc.

L'appareil d'implantation d'un fil dans un profilé en caoutchouc selon une direction donnée comprend :
- un moyen d'alimentation du fil en continu
- un support mobile apte à circuler sur un bâti selon un mouvement alternatif rectiligne entre une position relevée et une position abaissée, et comportant un sommet et une base entre lesquels est pratiqué un conduit destiné à guider le fil,
- une aiguille creuse comportant un canal dans lequel ledit fil est apte à circuler, fixée par l'une de ses extrémité à la base du support mobile dans la prolongation du conduit, et comportant à son autre extrémité une pointe apte à pénétrer dans ledit profilé en caoutchouc,
- un moyen de coupe disposé sur le bâti, comportant une lame rotative comprenant un fil de coupe apte, lorsque l'aiguille est en position relevée,à sectionner le fil à une distance donnée (d) de la pointe de l'aiguille à chaque cycle du mouvement alternatif de l'aiguille.

Ce dispositif se caractérise en ce que le moyen de coupe comprend une palette disposée en arrière du fil de coupe de la lame et destinée à heurter le fil sortant de l'aiguille juste après la coupe du fil par la lame.

Le procédé de mise en oeuvre du dispositif selon l'invention comprend les étapes suivantes :
A - lorsque l'aiguille est en position relevée au dessus de la surface du profilé, on libère une longueur de fil donnée du coté de la pointe de l'adite aiguille de manière à constituer une amorce,
B - on abaisse l'aiguille de manière à faire pénétrer la pointe de ladite aiguille dans le profilé sur une profondeur donnée,
C - on extrait l'aiguille du profilé en autorisant la circulation du fil à l'intérieur de l'aiguille,
D on relève la pointe de l'aiguille d'une hauteur donnée au dessus de la surface du profilé, de manière à libérer une longueur de fil entre la pointe de l'aiguille et la surface du profilé inférieure à la profondeur de pénétration de l'aiguille dans le profilé,
E on sectionne le fil au niveau de la surface du profilé de manière à libérer une nouvelle amorce de longueur donnée inférieure à la profondeur de pénétration de l'aiguille dans le profilé,

Ce procédé se caractérise en ce que, juste après la coupe, on donne à l'aide de la palette une impulsion à l'amorce dans une direction sensiblement perpendiculaire à la direction de l'aiguille de manière à replier l'amorce autour de la pointe de l'aiguille.

De la sorte, à chaque cycle, l'amorce de fil formée par le fil situé en dehors de l'aiguille du coté de la pointe juste après la coupe du fil, est forcée de se replier autour du bord du canal de sortie de l'aguille. Le bord du canal de sortie de l'aiguille joue en quelque sorte le rôle d'un coin agissant sur la partie repliée du fil et apte à entraîner ledit fil.

Cette disposition permet d'une part que le fil ne remonte pas dans le canal de l'aiguille et que l'amorce ne coulisse pas librement en sortie de l'aiguille pendant le trajet de descente de l'aiguille vers la surface du profilé. Ce qui aurait pour effet de provoquer un raccourcissement de l'amorce.

Elle permet également que l'amorce, repliée autour du bord du canal de sortie de l'aiguille, reste solidaire de la pointe de l'aiguille pendant la descente de l'aiguille dans l'épaisseur du profilé et ne soit pas entraînée par les forces de frottement engendrées par le contact entre l'amorce et les parois de la perforation réalisée par l'aiguille dans le profilé. Ce qui aurait pour effet de provoquer un allongement de l'amorce.

Lors de la remontée de l'aiguille, l'effet de coin disparaît et l'amorce est maintenue en position dans la perforation par le matériau caoutchoutique qui l'enserre, et bloque la remontée du fil présent dans l'aiguille, de sorte que le mouvement de remontée permet de faire circuler le fil à l'intérieur de l'aiguille. Pendant ce mouvement, la portion de fil comprise entre l'entrée de l'aiguille et l'amorce est maintenue en traction. Le fil est tiré dans l'aiguille et non plus poussé comme cela est proposé dans l'appareil faisant l'objet de la publication EP 1 213 383.

Pour faciliter la circulation du fil dans l'aiguille, il suffit alors de disposer d'un moyen d'alimentation délivrant le fil à tension nulle à l'entrée de l'aiguille pour nourrir le dispositif de manière continue, sans qu'il soit nécessaire à aucun moment du cycle d'implantation de mettre le fil en compression. La traction sur le fil exercée pendant la phase de remontée de l'aiguille a pour seul objet de vaincre les forces de frottement du fil à l'intérieur du canal de l'aiguille.

De plus, en raison de la simplicité de fonctionnement du dispositif selon l'invention, et du faible nombre d'organes mécaniques à mettre en jeu, il est possible d'augmenter de manière importante la vitesse d'implantation des inserts.

La description qui suit s'appuie sur un exemple de réalisation d'un dispositif apte à mettre en oeuvre le procédé selon l'invention, et sur les figures 1 à 8 dans lesquelles :
- la figure 1 représente une vue en perspective d'un dispositif selon l'invention,
- les figures 2, 3 et 4 représentent des détails de fonctionnement du couteau lors de la création de l'amorce,
- la figure 5 représente les différentes phases du cycle d'implantation d'un insert selon un premier mode d'utilisation du dispositif,
- Les figures 6 et 7 représentent des vues en perspective des positions des pièces du dispositif à des phases particulières du cycle d'implantation,
- la figure 8 représente une vue en perspective d'une variante d'exécution du dispositif selon l'invention.

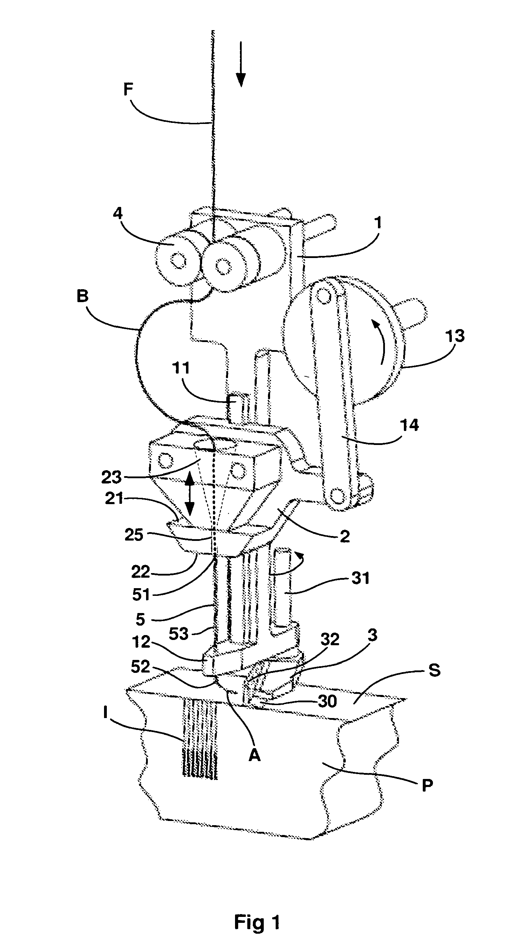

Le dispositif selon l'invention illustré à la figure 1 comprend un bâti 1 sur lequel sont montés un moyen d'alimentation 4 du fil F, un support mobile 2 supportant une aiguille creuse 5, et un moyen de coupe 3.

Le moyen d'alimentation 4, est placé en tête du bâti 1, et permet de délivrer le fil F à une vitesse constante donnée et régulée.

Le support mobile 2, est relié au bâti par l'intermédiaire d'un rail de guidage 11 rectiligne. Ce support mobile 2 est animé d'un mouvement alternatif entre une position relevée et une position basse, par une biellette 14, et un vilebrequin 13 animé en rotation par un moteur (non représenté) solidaire du bâti 1.

On entend par position relevée la position du bâti correspondant à la phase du cycle au cours de laquelle le bâti est à la position la plus éloignée de la surface S du profilé P, et par position basse la position correspondant à la phase du cycle au cours de laquelle le bâti est à la position la plus proche de la surface S.

Le support mobile 2 comprend une base 22 et un sommet 21 entre lesquels est pratiqué un conduit 25 (en pointillés) de guidage du fil F.

Une aiguille creuse 5, comportant un canal 53 dans lequel circule le fil F, est fixée par une de ses extrémités 51 à la base du support mobile 2 dans la prolongation du conduit 25 pratiqué entre la base 22 et le sommet 21 du support mobile 2. La pointe de l'aiguille, de laquelle sort le fil F, est dirigée vers la surface S du profilé P. L'aiguille est solidaire du mouvement alternatif du support 2.

Pour améliorer le guidage de l'aiguille dans son mouvement de monte et baisse un moyen de guidage 12 dans lequel l'aiguille circule librement est disposé à la base du bâti 2, au plus prés de la surface S du profilé P, de sorte que la pointe de l'aiguille ne s'échappe pas du moyen de guidage lorsque le support mobile est en position relevée.

Pour améliorer le guidage du fil F à l'entrée du conduit 25 située sur le sommet 21 du support mobile 2, un moyen de guidage du fil 23 est disposé sur le sommet dudit support. Ce moyen de guidage du fil 23 a la forme d'un passage de forme tronconique, dont le plus petit diamètre est placé du coté du conduit 25 pratiqué entre le sommet et la base du support mobile, et dont le plus grand diamètre est placé à l'entrée du fil F dans le moyen de guidage. Il va de soi que le moyen de guidage n'est pas lié à cette forme particulièrement simple de réalisation et peut faire l'objet de nombreuses adaptations.

Un moyen de coupe 3 comportant une lame 30 comprenant un fil de coupe 34, est implanté dans la partie basse du bâti 1. Ce moyen de coupe a la forme d'un couteau animé en rotation autour d'un axe 31, sensiblement parallèle à la direction du mouvement de l'aiguille, par un moteur (non représenté) fixé au bâti 1. Le moyen de coupe est disposé de façon réglable en translation sur l'axe 31 de manière à sectionner le fil F entre la surface F du profilé et la pointe de l'aiguille 52 à une distance donnée d et ajustable de ladite pointe. Le couteau rotatif est placé entre le moyen de guidage 12 de l'aiguille 5, et la surface S du profilé P.

Le mouvement rotatif du couteau est réglé de manière à effectuer un tour complet à chaque cycle de va-et-vient de l'aiguille. Ce mouvement est calé de telle sorte que le fil F est sectionné lorsque la pointe de l'aiguille est en position relevée. A cet effet, il peut être intéressant d'utiliser le même moyen de motorisation pour animer le vilebrequin 13 et le couteau rotatif 3, en adaptant en conséquence les transmissions mécaniques.

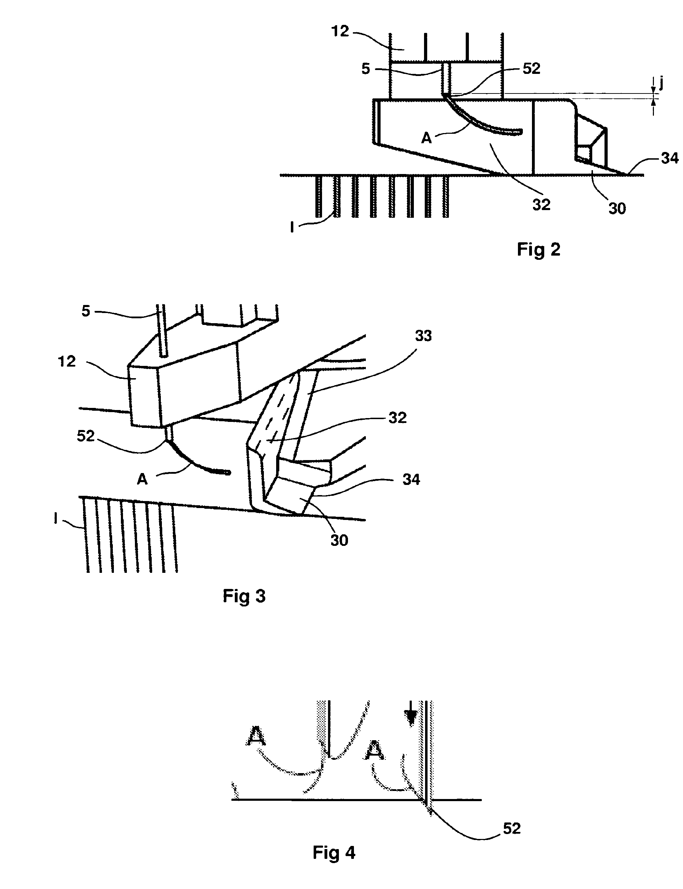

La lame 30 du couteau est prolongée par une palette 32 s'étendant sensiblement perpendiculairement au plan de la lame. En considérant le sens de progression de la lame, la palette 32 est placée en arrière du fil de coupe, de manière à donner un impact à l'amorce immédiatement après la coupe du fil. Cette impulsion a pour effet de forcer l'extrémité libre du fil constituant l'amorce à se replier autour de la pointe 52 comme cela est illustré par les figures 2 et 3.

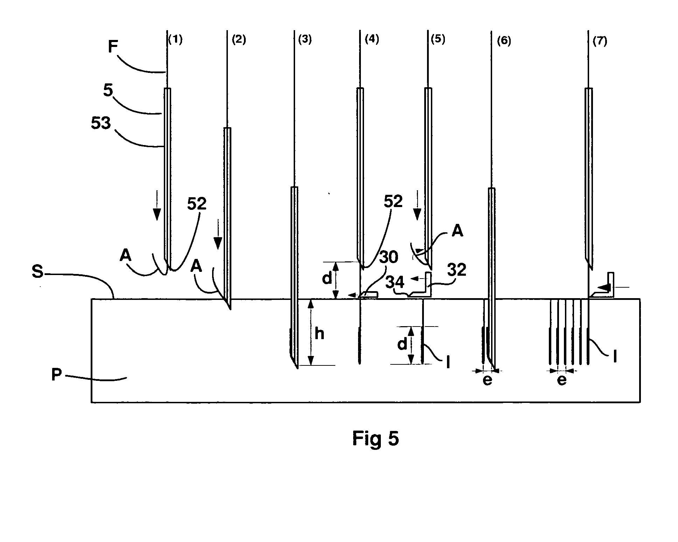

Les principales positions du cycle d'animation du dispositif selon l'invention sont détaillées dans la figure 5, et sont repérées par les chiffres (1) à (6) placés entre parenthèses. Chaque cycle correspond à l'implantation d'un insert I dans le profilé P.

La première position (1) correspond à la position relevée de l'aiguille 5 au départ de son mouvement en direction de la position basse juste après la coupe. On observe que l'extrémité libre du fil F dépasse de la pointe de l'aiguille 52 pour former une amorce A. repliée autour du bord du canal 52 de sortie du fil de l'aiguille.

La longueur de l'amorce A doit être choisie judicieusement. En effet elle ne doit pas être trop longue de manière à ce que, pendant la pénétration de l'aiguille dans le profilé, les forces de frottement entre l'amorce et le produit caoutchoutique du profilé ne soient pas supérieures à l'effet de coin décrit ci-dessus, mais elle ne doit pas non plus être trop courte de manière à ce que, lors de la remontée de l'aiguille, l'amorce reste en position au fond de la perforation. En pratique on considèrera, pour les fils textiles usuellement employés dans l'industrie du pneumatique, que la longueur de l'amorce peut utilement être comprise entre 3 mm et 10 mm, ce qui couvre la plupart des applications dans ce domaine.

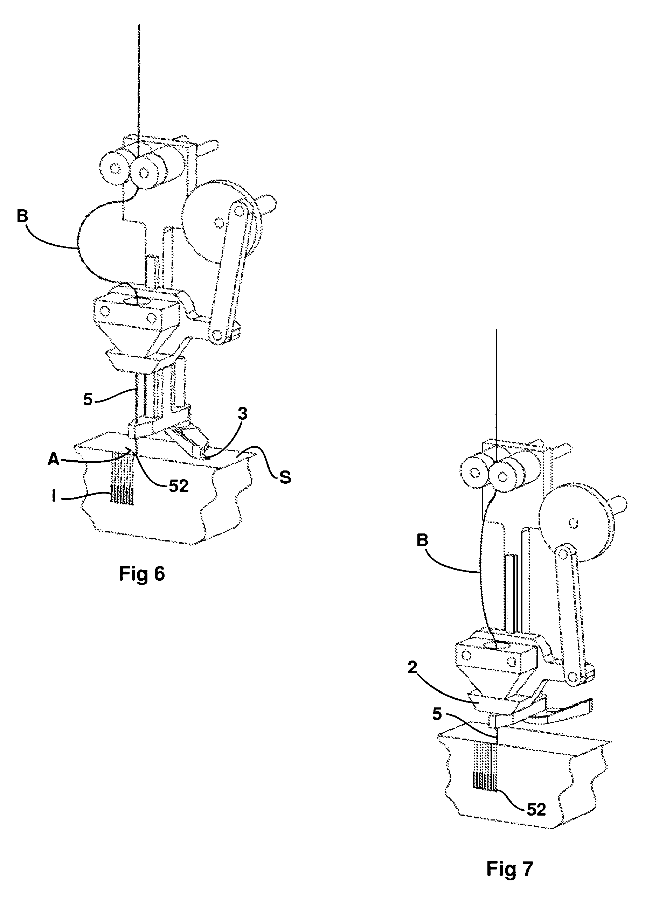

La deuxième position (2) correspond au mouvement de descente de l'aiguille 5, et au moment où la pointe de l'aiguille perce la surface S du profilé en caoutchouc P. Cette position est illustrée également dans la vue en perspective de la figure 6.

On observe qu'à cet instant précis, l'amorce A est repliée le long de l'aiguille 5. Dans cette configuration le fil est bloqué par le bord du canal de sortie ce qui prive le fil de tout mouvement dans la direction opposée au sens de progression de l'aiguille. Le bord du canal de sortie de l'aiguille fait son office de coin et empêche l'amorce d'entraîner le fil.

La troisième position (3) correspond à la position basse de l'aiguille, dans laquelle la pointe de l'aiguille pénètre dans le profilé à une profondeur h donnée, et correspond à la vue en perspective de la figure 7.

L'aiguille initie alors un mouvement de remontée de sa position basse vers sa position haute illustrée à la position (4). La position relevée est atteinte lorsque la pointe de l'aiguille est distante d'une longeur d donnée et réglable de la surface S du profilé P.

Pendant ce mouvement de remontée, la partie libre du fil et de l'amorce A sont enserrés par le matériau caoutchoutique du profilé. Les forces de frottement s'exerçant sur l'amorce et, de manière progressive, sur le reste du fil libéré par l'aiguille, autorisent la mise en tension du fil F, et l'aiguille remonte le long du fil qui demeure fixe par rapport à la surface S du profilé P.

Au moment où la position relevée est atteinte, la lame 5 sectionne le fil et libère une amorce A disponible pour l'implantation de l'insert I suivant, comme cela est illustré par la position (4).

On observe qu'il est intéressant de sectionner le fil au plus près de la surface S. A cet effet il suffit de disposer le dispositif d'implantation selon l'invention en positionnant la lame 3 au plus prés de la surface S.

Le réglage de la longueur d, qui détermine la longueur de l'amorce A, se fait en plaçant le support 2 en position relevée, et en adaptant la position axiale de la lame sur son axe 31. Le réglage de la profondeur P se fait en modifiant l'amplitude du mouvement du support 2 en jouant sur le diamètre du vilebrequin 13. L'amplitude correspond à la profondeur h augmentée de la longueur d.

Juste après la coupe, comme cela est illustré illustrée par la position (5), la palette 32 vient heurter le fil et confère une impulsion à l'amorce A dans une direction sensiblement perpendiculaire au sens du mouvement de l'aiguille.

Pour que le repli de l'amorce soit le plus prononcé possible, on s'arrange pour que le jeu j entre le bout de l'aiguille 52 en position haute et la palette 32 soit aussi faible que possible, et au moins égal au diamètre du fil, comme cela est illustré à la figure 2. Le jeu j peut utilement être compris entre un et cinq fois le diamètre du fil.

Il peut aussi être pratique de pouvoir ajuster le jeu j lorsque la longueur de l'amorce varie. A cet effet, on peut donc prévoir des jeux de palettes amovibles de hauteurs variables en fonction de la longueur de l'amorce désirée et fixées sur le support 33 de la lame portant la palette 32.

Ce mouvement de repli de l'amorce autour de la pointe 52, comme cela est illustré à la figure 4, est suffisant pour bloquer le mouvement de remontée du fil à l'intérieur de l'aiguille, lors du déplacement de l'aiguille entre la position haute illustrée en (5) et la position dans laquelle la pointe pénètre dans la surface du profilé illustrée en (2).

De manière à éviter la remontée du fil, on s'arrange également pour que la tension du fil à l'entrée du conduit 25 de l'aiguille soit nulle, en pilotant le moyen d'alimentation 4 de manière à ce que la portion de fil comprise entre le moyen d'alimentation 4 disposé sur le bâti 1, et l'entrée 51 du conduit 25 ou du moyen de guidage 23, fasse une boucle B, quelle que soit la position du support mobile 2, comme cela est illustré à la figure 1, ainsi qu'aux figures 6 et 7.

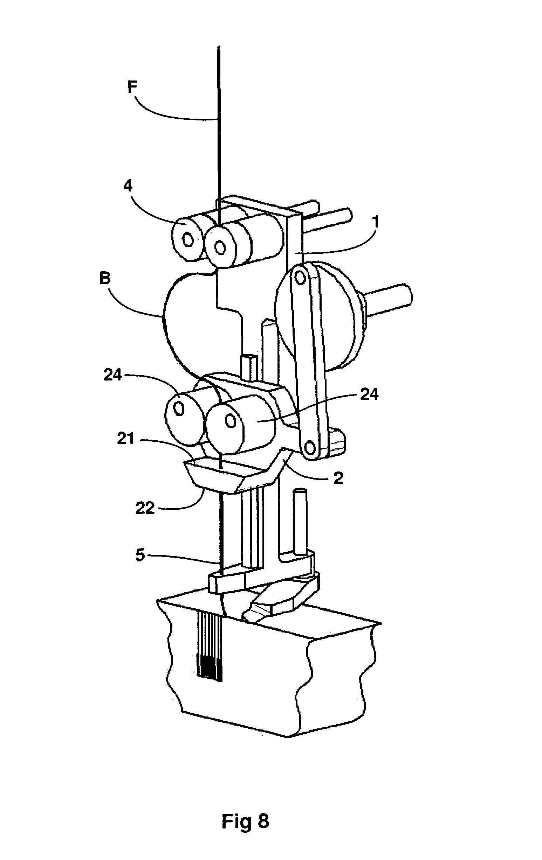

La figure 8 illustre le cas d'un dispositif dans lequel le moyen de guidage se présente sous la forme de deux rouleaux 24 entre lesquels le fil peut circuler. Ces rouleaux peuvent être totalement libres en rotation dans les deux sens ou être bloqués en rotation dans un des deux sens de manière à interdire la remontée du fil en cas de mise en tension intempestive de la partie de fil comprise entre les rouleaux 24 et le moyen d'alimentation 3.

L'implantation de l'insert I suivant se fait en déplaçant le profilé d'un pas e relativement au bâti 1, comme cela est illustré par la position (6), puis en reproduisant le cycle qui vient d'être décrit.

En répétant ces opérations autant de fois que nécessaire, on obtient un profilé de caoutchouc dans lequel des inserts I sont implantés de façon régulière, tel que cela est représenté à la position (7).

L'insert de longueur h comporte à sa base un repli de longueur d correspondant à l'amorce A. La présence d'une double longueur de fil à la base de l'insert présente l'avantage de renforcer de manière préférentielle la base des éléments de sculpture, lorsque la surface S correspond à la surface d'une bande de roulement de pneumatique en contact avec le sol.

Le cycle faisant l'objet de la présente description illustre le cas dans lequel les inserts sont implantés perpendiculairement à la surface S du profilé P. II est bien évidemment possible de modifier l'angle d'implantation en inclinant le bâti de sorte que le rail 11 sur lequel circule le support mobile 2 fasse un angle donné avec la surface S.

## Revendications

1. Dispositif d'implantation d'un fil (F) dans un profilé (P) en caoutchouc selon une direction donnée comprenant :
- un moyen d'alimentation (4) du fil en continu disposé sur un bâti fixe
- un support mobile (2) apte à circuler sur un bâti (1) selon un mouvement alternatif rectiligne entre une position relevée et une position abaissée, et comportant un sommet (21) et une base (22) entre lesquels est pratiqué un conduit (25) destiné à guider le fil (F),
- une aiguille (5) creuse comportant un canal (53) dans lequel ledit fil (F) est apte à circuler, fixée par l'une de ses extrémité (51) à la base (22) du support mobile (2) dans la prolongation du conduit (25), et comportant à son autre extrémité une pointe (52) apte à pénétrer dans ledit profilé (P) en caoutchouc,
- un moyen de coupe (3) disposé sur le bâti (1), comportant une lame (30) rotative comprenant un fil de coupe (34) apte, lorsque l'aiguille est en position relevée, à sectionner le fil (F) à une distance donnée (d) de la pointe de l'aiguille à chaque cycle du mouvement alternatif de l'aiguille,
**caractérisé en ce que** le moyen de coupe (3) comprend une palette (32) disposée en arrière du fil de coupe (34) de la lame, et destinée à replier l'amorce autour de la pointe (52) de l'aiguille juste après la coupe du fil par la lame (30).

2. Dispositif selon la revendication 1, dans lequel le moyen de coupe (3) est un couteau rotatif autour d'un axe (31) parallèle à la direction du mouvement de l'aiguille.

3. Dispositif selon l'une des revendications 1 ou 2 dans lequel le moyen d'alimentation (4) est relié à un moyen de régulation apte à maintenir la portion de fil située entre ledit moyen d'alimentation et l'entrée dans le conduit (25) du support mobile (2) à une tension nulle quelque soit la position du support mobile (2).

4. Procédé d'implantation d'un insert (I) formé d'un tronçon de fil dans un profilé (P) en caoutchouc par une de ses surface (S), à l'aide d'un dispositif selon l'une des revendications 1 à 3, comprenant les étapes suivantes au cours desquelles :
A - lorsque l'aiguille est en position relevée au dessus de la surface (S) du profilé (P), on libère une longueur de fil donnée du coté de la pointe (52) de manière à constituer une amorce (A),
B - on abaisse la pointe (52) de l'aiguille (5) de manière à faire pénétrer la pointe (52) de ladite aiguille (5) dans le profilé (P) sur une profondeur (h) donnée,
C - on extrait l'aiguille (5) du profilé (P) en autorisant la circulation du fil (F) à l'intérieur de l'aiguille,
D - on relève la pointe (52) de l'aiguille (5) d'une hauteur (d) donnée, au dessus de la surface (S) du profilé (P), de manière à libérer une longueur (d) de fil entre la pointe de l'aiguille (52) et la surface (S) du profilé (P) inférieure à la profondeur (h) de pénétration de l'aiguille dans le profilé,
E - on sectionne le fil au niveau de la surface (S) du profilé (P) à l'aide d'un moyen de coupe (3) dont la lame rotative comporte une palette (32) disposée en arrière du fil de coupe (34) de ladite lame, de manière
à libérer une nouvelle amorce (A) de longueur donnée (d),
**caractérisé en ce que**, juste après la coupe, à l'aide de ladite palette (32), on donne une impulsion à l'amorce (A) dans une direction sensiblement perpendiculaire à la direction de déplacement de l'aiguille de manière à replier l'amorce autour de la pointe de l'aiguille.

5. Procédé selon la revendication 4 dans lequel, à l'issue de l'étape F, on déplace d'un pas donné (e) le profilé (P) par rapport au bâti de manière à réaliser l'implantation d'un nouvel insert (I).

6. Procédé selon la revendication 4, dans lequel, au cours de l'étape E on sectionne le fil sensiblement au niveau de la surface du profilé.

7. Procédé selon la revendication 4, dans lequel on ajuste la distance (j) entre le haut de la palette (32) et la pointe de l'aiguille (52) en position haute pour que cette distance soit comprise une à cinq fois l'épaisseur du fil (F).

8. Procédé selon la revendication 4, dans lequel on régule le moyen d'alimentation (4) de manière à ce que la portion de fil comprise entre le moyen d'alimentation (4), et l'entrée (51) du conduit de l'aiguille (5) fasse une boucle B quelle que soit la position du support mobile (2).

## Patentansprüche

1. Vorrichtung zur Einbettung eines Drahtes (F) in ein Kautschukprofil (P) in einer gegebenen Richtung, umfassend:
- ein Mittel (4) zur kontinuierlichen Zuleitung des Drahtes, das auf einem festen Gehäuse angeordnet ist,
- einen beweglichen Träger (2), der geeignet ist, auf einem Gehäuse (1) in einer geraden Wechselbewegung zwischen einer angehobenen Position und einer abgesenkten Position umzulaufen, umfassend eine Spitze (21) und eine Basis (22), zwischen denen eine Leitung (25) vorgesehen ist, die dazu bestimmt ist, den Draht (F) zu führen,
- eine hohle Nadel (5), umfassend einen Kanal (53), in dem der Draht (F) umlaufen kann, die mit einem ihrer Enden (51) an der Basis (22) des beweglichen Trägers (2) in der Verlängerung der Leitung (25) befestigt ist und an ihrem anderen Ende eine Spitze (52) umfasst, die geeignet ist, in das Kautschukprofil (P) einzudringen,
- ein auf dem Gehäuse (1) angeordnetes Schneidemittel (3), umfassend ein rotierendes Schneidblatt (30), umfassend einen Schneiddraht (34), der geeignet ist, wenn sich die Nadel in der angehobenen Position befindet, den Draht (F) in einem gegebenen Abstand (d) von der Spitze der Nadel bei jedem Wechselbewegungszyklus der Nadel abzutrennen,
**dadurch gekennzeichnet, dass** das Schneidemittel (3) eine Palette (32) umfasst, die hinten am Schneiddraht (34) des Schneidblattes angeordnet und dazu bestimmt ist, den Ansatz um die Spitze (52) der Nadel direkt nach dem Schneiden des Drahtes durch das Schneidblatt (30) umzulegen.

2. Vorrichtung nach Anspruch 1, bei dem das Schneidemittel (3) ein um eine Achse (31) parallel zur Bewegungsrichtung der Nadel rotierendes Messer ist.

3. Vorrichtung nach einem der Ansprüche 1 oder 2, bei dem das Zuleitungsmittel (4) mit einem Regulierungsmittel verbunden ist, das geeignet ist, den Drahtabschnitt, der sich zwischen dem Zuleitungsmittel und dem Eingang in die Leitung (25) des beweglichen Trägers (2) befindet, auf einer Nullspannung zu halten, unabhängig von der Position des beweglichen Trägers (2).

4. Verfahren zur Einbettung eines Einsatzes (I), der von einem Drahtabschnitt gebildet ist, in ein Kautschukprofil (P) mit einer seiner Seiten (S) mit Hilfe einer Vorrichtung nach einem der Ansprüche 1 bis 3, umfassend die folgenden Schritte, während derer:
A- wenn die Nadel in der angehobenen Position über der Fläche (S) des Profils (P) ist, eine gegebene Drahtlänge auf der Seite der Spitze (52) freigelegt wird, um einen Ansatz (A) zu bilden,
B- die Spitze (52) der Nadel (5) abgesenkt wird, um die Spitze (52) der Nadel (5) in das Profil (P) auf einer gegebenen Tiefe (h) eindringen zu lassen,
C- die Nadel (5) aus dem Profil (P) gezogen wird, wobei das Umlaufen des Drahtes (F) im Inneren der Nadel gestattet wird,
D- die Spitze (52) der Nadel (5) um eine gegebene Höhe (d) über die Fläche (S) des Profils (P) angehoben wird, um eine Drahtlänge (d) zwischen der Spitze der Nadel (52) und der Fläche (S) des Profils (P) freizulegen, die geringer als die Eindringtiefe (h) der Nadel in das Profil ist,
E- der Draht im Bereich der Fläche (S) des Profils (P) mit Hilfe eines Schneidemittels (3) abgetrennt wird, dessen rotierendes Schneidblatt eine Palette (32) umfasst, die hinten am Schneiddraht (34) des Schneidblattes angeordnet ist, um einen neuen Ansatz (A) von gegebener Länge (d) freizulegen,
**dadurch gekennzeichnet, dass** direkt nach dem Schneiden mit Hilfe der Palette (32) dem Ansatz (A) ein Impuls in eine Richtung im Wesentlichen senkrecht auf die Bewegungsrichtung der Nadel gegeben wird, um den Ansatz um die Spitze der Nadel umzulegen.

5. Verfahren nach Anspruch 4, bei dem nach dem Schritt F das Profil (P) in Bezug zum Gehäuse um einen gegebenen Abstand (e) verschoben wird, um die Einbettung eines neuen Einsatzes (I) durchzuführen.

6. Verfahren nach Anspruch 4, bei dem während des Schrittes E der Draht im Wesentlichen auf Höhe der Fläche des Profils abgetrennt wird.

7. Verfahren nach Anspruch 4, bei dem der Abstand (j) zwischen dem oberen Bereich der Palette (32) und der Spitze der Nadel (52) in der oberen Position derart eingestellt wird, dass dieser Abstand zwischen ein- bis fünfmal die Dicke des Drahtes (F) ausmacht.

8. Verfahren nach Anspruch 4, bei dem das Zuleitungsmittel (4) derart reguliert wird, dass der Drahtabschnitt zwischen dem Zuleitungsmittel (4) und dem Eingang (51) der Leitung der Nadel (5) eine Schleife B macht, unabhängig von der Position des beweglichen Trägers (2).

## Claims

1. Device for embedding a thread (F) in a rubber profiled element (P) in a given direction comprising:
- a continuous thread-feed means (4) arranged on a fixed structure,
- a moving support (2) able to run along a structure (1) in a reciprocating rectilinear movement between a raised position and a lowered position and comprising a top (21) and a base (22) between which is formed a duct (25) intended to guide the thread (F),
- a hollow needle (5) comprising a canal (53) in which the said thread (F) is able to run, which needle is fixed by one of its ends (51) to the base (22) of the moving support (2) in the continuation of the duct (25), and comprising at its other end a tip (52) capable of penetrating the said rubber profiled element (P),
- a cutting means (3) arranged on the structure (1), comprising a rotary blade (30) comprising a cutting wire (34) able, when the needle is in the raised position, to cut off the thread (F) at a given distance (d) from the tip of the needle upon each cycle of reciprocating movement of the needle,
**characterized in that** the cutting means (3) comprises a paddle (32) arranged behind the cutting wire (34) of the blade and intended to fold the tail around the tip (52) of the needle just after the thread has been cut by the blade (30) .

2. Device according to Claim 1, in which the cutting means (3) is a cutter that rotates about an axis (31) parallel to the direction of movement of the needle.

3. Device according to one of Claims 1 and 2, in which the feed means (4) is connected to a regulating means capable of keeping the portion of thread situated between the said feed means and the entrance to the duct (25) of the moving support (2) at zero tension irrespective of the position of the moving support (2).

4. Method for embedding an insert (I) formed of a length of thread in a rubber profiled element (P) via one of the surfaces (S) thereof, using a device according to one of Claims 1 to 3, comprising the following steps during which:
A - when the needle is in the raised position above the surface (S) of the profiled element (P), a given length of thread is released on the tip (52) side to constitute a tail (A),
B - the tip (52) of the needle (5) is lowered to make the tip (52) of the said needle (5) penetrate the profiled element (P) over a given depth (h),
C - the needle (5) is extracted from the profiled element (P) while allowing the thread (F) to run along inside the needle,
D - the tip (52) of the needle (5) is raised by a given height (d), above the surface (S) of the profiled element (P), so as to release a length (d) of thread between the tip of the needle (52) and the surface (S) of the profiled element (P) which length is less than the depth (h) to which the needle penetrated the profiled element,
E - the thread is cut off level with the surface (S) of the profiled element (P) using a cutting means (3) the rotary blade of which comprises a paddle (32) positioned to the rear of the cutting wire (34) of the said blade, so as to release a new tail (A) of given length (d),
**characterized in that**, just after cutting, the said paddle (32) imparts to the tail (A) an impulse in a direction substantially perpendicular to the direction of travel of the needle so as to fold the tail around the tip of the needle.

5. Method according to Claim 4, in which, on completion of step F, the profiled element (P) is moved by a given step length (e) with respect to the structure so that a new insert (I) can be embedded.

6. Method according to Claims 4, in which, during step E, the thread is cut off substantially level with the surface of the profiled element.

7. Method according to Claim 4, in which the distance (j) between the top of the paddle (32) and the tip of the needle (52), when the needle is in the raised position, is adjusted so that this distance is comprised between one and five times the diameter of the thread (F).

8. Method according to Claim 4, in which the feed means (4) is regulated in such a way that the portion of thread comprised between the feed means (4) and the entry (51) to the duct of the needle (5) forms a loop B irrespective of the position of the moving support (2).
